# EUROPEAN PATENT APPLICATION

(11) **EP 4 580 089 A1**
(43) Date of publication of application: **02.07.2025**
(21) Application number: 23857213.5
(22) Date of filing: 09.08.2023
(51) Int. Cl.: H04B 10/2575, G02F 1/025, G02F 1/035, G02F 1/065, H04B 1/18

(54) **WIRELESS RECEPTION DEVICE**

(30) Priority: 25.08.2022 JP 2022134397
(71) Applicant: Tokushima University, Tokushima-shi, Tokushima 770-8501 (JP); National Institute of Information and Communications Technology, Koganei-shi, Tokyo 184-8795 (JP)
(72) Inventor: YASUI Takeshi, Tokushima-shi, Tokushima 770-8501 (JP); KUSE Naoya, Tokushima-shi, Tokushima 770-8501 (JP); TOKIZANE Yu, Tokushima-shi, Tokushima 770-8501 (JP); HASE Eiji, Tokushima-shi, Tokushima 770-8501 (JP); KAJI Takahiro, Koganei-shi, Tokyo 184-8795 (JP); KAMADA Shun, Koganei-shi, Tokyo 184-8795 (JP); MOROHASHI Isao, Koganei-shi, Tokyo 184-8795 (JP); HISATAKE Shintaro, Nagoya-shi, Aichi 464-8601 (JP)
(74) Representative: Liedtke & Partner Patentanwälte
(86) International application number: PCT/JP2023/029111
(87) International publication number: WO 2024/043100

(57) **Abstract**

The present invention aims to enable seamless connection between high-frequency wireless communication and optical communication. A wireless reception device according to the present invention is a device for receiving a wireless signal modulated with an information signal, including a reception antenna, an excitation laser that outputs laser light with a predetermined wavelength, a micro-optical resonator that is excited by the laser light and generates an optical frequency comb with a repetition frequency different from a carrier frequency of the wireless signal by a difference frequency, an optical bandpass filter that independently separates an arbitrary optical frequency mode and an adjacent optical frequency mode from the optical frequency comb consisting of optical frequency modes, the adjacent optical frequency mode being spaced apart from the arbitrary optical frequency mode by a repetition frequency, an optical circulator that optically amplifies the separated arbitrary and adjacent optical frequency modes by injection locking to a slave laser with a wavelength adjacent to the separated arbitrary and adjacent optical frequency modes, an electro-optic conversion element that is provided at a reception portion of the reception antenna and optically modulates the arbitrary optical frequency mode in accordance with the wireless signal, and an optical bandpass filter that separates the adjacent frequency mode and a modulated component of the arbitrary optical frequency mode adjacent thereto.

## Description

### TECHNICAL FIELD

The present invention relates to wireless reception devices for receiving wireless signals from other base stations or the like.

### BACKGROUND ART

Traditionally, in mobile (wireless) communications (such as 2G, 3G, 4G, and 5G), the advancement of semiconductor technology has driven evolution across generations (increasing speed and frequency). However, the frequencies to be handled in next generation mobile communications (Beyond 5G / 6G) are expected to extend into the so-called terahertz band (hereinafter, the THz band) with carrier frequencies of 300 GHz or higher, potentially reaching the technological limit (i.e., the upper frequency limit) of electrical methods. Specifically, fundamental issues are said to emerge, such as reduction in output power of wireless carrier waves, difficulty in balancing high-frequency conversion and power saving, increased phase noise, and time delays caused by signal conversion between optical and mobile communication.

THz wave detection is generally carried out using electrical methods. By using a high-speed THz detection element, such as a Schottky barrier diode (SBD), terahertz waves can be directly detected as electrical signals (homodyne detection or square-law detection). On the other hand, by mixing the THz wave (RF signal) with a local oscillator signal (LO signal) using a high-frequency mixer, a beat signal (IF signal), which corresponds to a difference frequency between the two signals, can be measured in the microwave or RF band (heterodyne detection).

On the other hand, optical communication, which utilizes optical fiber networks, offers the fastest information transmission speed, and in recent years, the development of silicon photonics technology has progressed, enabling ultra-high speed, large capacity, low latency, and low power consumption by replacing electronic wiring inside devices with optical wiring or optical waveguide. Such a background has led to recent examples of optical detection of THz wave in wireless communication. For example, spatially propagating THz waves are captured as electricfield signals applied to electro-optic crystals, and by utilizing the electro-optic effect (for example, the Pockels effect), THz-wave transmission information can be superimposed onto optical signals as modulated sideband light (Non-Patent Document 1). Moreover, a disclosed method employs two adjacent mode lights whose frequencies are spaced apart by approximately the frequency of a THz wave (wireless carrier), and an optical beat signal is detected between modulated sideband light of one mode light and an unmodulated carrier light of the other mode light to cancel out common phase noise, while improving signal-to-noise ratio (SN ratio) through heterodyne detection (Non-Patent Document 2).

On the other hand, an optical frequency comb (or microcomb) generated from a micro-resonator is used to create two mode lights with synchronized optical phases at an optical frequency difference equal to the frequency of a THz wave (wireless carrier), and the two mode lights are employed for optical THz wave generation (Non-Patent Document 3). Moreover, the use of laser injection locking has been reported to optically amplify mode light within a micro-optical comb while maintaining satisfactorily low phase noise characteristics of the mode light (Non-Patent Document 4).

### Prior Art Documents

### Non-Patent Documents

Non-Patent Document 1: T. Kaji, I. Morohashi, Y. Tominari, N. Sekine, T. Yamada, and A. Otomo, "W-band optical modulators using electro-optic polymer waveguides and patch antenna arrays," Optics Express, Vol. 29, Issue 19, pp. 29604-29614 (2021).
Non-Patent Document 2: S. Hisatake, H. H. N. Pham, and T. Nagatsuma, "Visualization of the spatial-temporal evolution of continuous electromagnetic waves in the terahertz range based on photonics technology," Optica, Vol. 1, Issue 6, pp. 365-371 (2014).
Non-Patent Document 3: N. Kuse, K. Nishimoto, Y. Tokizane, S. Okada, G. Navickaite, M. Geiselmann, K. Minoshima, and T. Yasui, "Low phase noise THz generation from a fiber-referenced Kerr microresonator soliton comb," Communications Physics, Vol. 5, Art. 312 (2022).
Non-Patent Document 4: N. Kuse and K. Minoshima, "Amplification and phase noise transfer of a Kerr microresonator soliton comb for low phase noise THz generation with a high signal-to-noise ratio," Optics Express, Vol. 30, Issue 1, pp. 318-325 (2022).

### SUMMARY OF THE INVENTION

### PROBLEMS TO BE SOLVED BY THE INVENTION

However, the electrical THz detection methods have the drawback of requiring medium-sized, complex, and expensive devices and being susceptible to factors such as electromagnetic induction noise. Moreover, when connecting between wireless and optical communications, signal conversion between electrical and optical signals causes time delays. On the other hand, in the optical detection methods of THz wave, THz-wave transmission information can be instantly superimposed onto optical carrier signals via the electro-optic effect and measured as optical signals, enabling the use of small-sized, simple, inexpensive, and technically mature optical communication platforms without large modification. As a result, these methods exhibit good compatibility with optical communication and high versatility, but have difficulty in achieving sufficient detection sensitivity for high-speed wireless communication due to low electro-optic conversion efficiency in the THz frequency band to be used for next generation mobile communications. Further, it is difficult to obtain two mode lights with low relative phase noise and frequencies spaced apart by approximately the frequency of the THz wave (wireless carrier). In addition, no method has been suggested for optically amplifying such two mode lights while maintaining satisfactorily low phase noise characteristics.

### SOLUTION TO THE PROBLEMS

One aspect of the present invention is directed to a wireless reception device for receiving a wireless signal modulated with an information signal, including a reception antenna, an excitation laser that outputs laser light with a predetermined wavelength, a micro-optical resonator that is excited by the laser light and generates an optical frequency comb with a repetition frequency different from a carrier frequency of the wireless signal by a difference frequency, an optical bandpass filter that independently separates an arbitrary optical frequency mode and an adjacent optical frequency mode from the optical frequency comb consisting of optical frequency modes, the adjacent optical frequency mode being spaced apart from the arbitrary optical frequency mode by a repetition frequency, an optical circulator that optically amplifies the separated arbitrary and adjacent optical frequency modes by injection locking to a slave laser with a wavelength adjacent to the separated arbitrary and adjacent optical frequency modes, an electro-optic conversion element that is provided at a reception portion of the reception antenna and optically modulates the arbitrary optical frequency mode in accordance with the wireless signal, and an optical bandpass filter that separates the adjacent frequency mode and a modulated component of the arbitrary optical frequency mode adjacent thereto.

The difference frequency may be between 10 GHz and 100 GHz.

The wireless reception device may further include a demodulation device that mixes the modulated component of the arbitrary optical frequency mode and the unmodulated component of the adjacent optical frequency mode spaced apart from the arbitrary optical frequency mode by the difference frequency and converts the resultant optical beat signal into an electric signal.

The electro-optic conversion element may be composed of one or more electro-optic crystal materials selected from the group consisting of lithium niobate (LiNbO₃), zinc telluride (ZnTe), gallium phosphide (GaP), gallium arsenide (GaAs), and DAST.

The electro-optic conversion element may be composed of an electro-optic polymer (also referred to below as an "EO polymer").

The micro-optical resonator may be composed of one or more media having a non-linear optical effect and selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

The reception antenna may be a parabolic antenna, a Cassegrain antenna, or a horn antenna and has the electro-optic conversion element provided near a focal point of the antenna.

The slave laser may be a distributed feedback (DFB) laser without an optical isolator at an emission portion.

### EFFECT OF THE INVENTION

One aspect of the present invention allows wireless transmission signals transmitted over wireless carriers in the terahertz band to be superimposed onto optical carrier with high efficiency, low phase noise, and minimal time delays, allowing information signals to be readily demodulated using standard optical communication platforms. Thus, it is possible to realize a wireless reception device that satisfies the requirements for Beyond 5G and higher communication standards and enables seamless connection with optical communication.

### BRIEF DESCRIPTION OF THE DRAWINGS

FIG. 1 is a block diagram of a wireless reception device in the first embodiment of the present invention.
FIG. 2 is a schematic diagram illustrating a specific example of an electro-optic conversion element and a reception antenna in the first embodiment of the present invention.
FIG. 3 presents diagrams describing the operational principles of injection locking to an optical frequency comb mode in a slave laser.
FIG. 4 presents conceptual diagrams describing the specific example of the electro-optic conversion element in the first embodiment of the present invention.
FIG. 5 is a diagram describing the operation of the electro-optic conversion element in the first embodiment of the present invention.
FIG. 6 presents diagrams describing the operation of electro-optic phase modulation in the first embodiment of the present invention.
FIG. 7 presents diagrams describing the operation of optical heterodyne beat detection of modulated sideband light in the first embodiment of the present invention.
FIG. 8 is a diagram describing a method of an experiment in a first example of the present invention.
FIG. 9 presents graphs showing the results of the experiment in the first example of the present invention.
FIG. 10 is a diagram describing a method of an experiment in a second example of the present invention.
FIG. 11 presents graphs showing the results of the experiment in the second example of the present invention.

### MODES FOR CARRYING OUT THE INVENTION

### (First Embodiment)

Hereinafter, the first embodiment will be described in detail with reference to the drawings. In this embodiment, a wireless reception device 2 is assumed to be a device that performs the process of receiving a wireless signal transmitted from a wireless base station 1, superimposing an information signal contained in the wireless signal onto an optical carrier, and transmitting the resultant signal to a demodulation device 3.

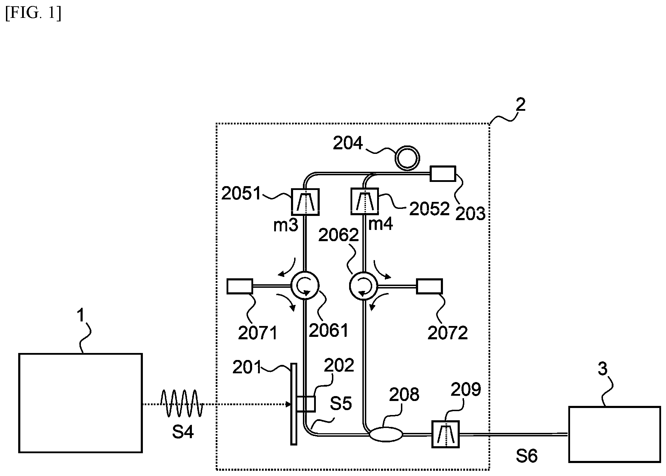

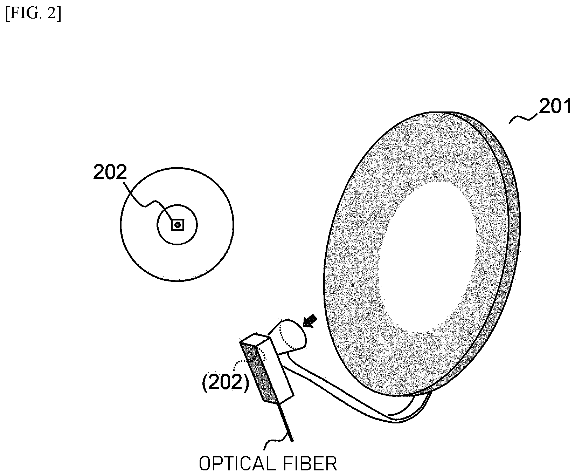

FIG. 1 illustrates a block diagram of the wireless reception device 2 in the present embodiment. In FIG. 1, the wireless reception device 2 has a reception antenna 201 to receive a wireless signal S4. The reception antenna 201 is equipped with an electro-optic conversion element 202 for converting the wireless signal received by the reception antenna 201 into an optical modulated signal. FIG. 2 illustrates a specific example of the reception antenna 201.

The reception antenna 201 can be a parabolic or Cassegrain antenna having a concave reflecting surface. Alternatively, the reception antenna 201 can be a horn antenna having a convex lens on an opening surface. In either case, the electro-optic conversion element 202 is provided near the focal point of the antenna. Note that in the present embodiment, the wireless base station 1 is assumed to have a high-gain directional antenna sufficiently adjusted in position relative to the reception antenna 201 to minimize transmission loss.

Furthermore, in FIG. 1, 203 denotes an excitation laser for emitting laser light of a constant frequency (wavelength). The laser emission portion is preferably a DFB laser emitting light whose emission wavelength is at or around 1550 nm. Denoted at 204 is a micro-optical resonator for generating an optical frequency comb when excited by the laser light. The optical frequency comb refers to light with an ultra-discrete multispectral structure consisting of an array of a large number of optical frequency modes whose optical phases arranged at equal frequency intervals, patterned like comb teeth.

The micro-optical resonator 204 can be formed in a ring shape on a semiconductor substrate. The diameter of the ring can range from 40 µm to 400 µm. Alternatively, the micro-optical resonator can be composed of one or more media having a non-linear optical effect and selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

The micro-optical resonator 204 has a short optical resonator length and therefore can generate an optical frequency comb (micro-optical comb) with frequencies between adjacent optical frequency modes designed to extend as high as the terahertz band. The frequencies (fᵣₑₚ) between the adjacent optical frequency modes can be set from 50 GHz to 3 THz, preferably from 100 GHz to 1 THz, and more preferably from 350 GHz to 600 GHz.

In the present embodiment, the repetition frequency (fᵣₑₚ) of the optical frequency comb is set to differ from the carrier frequency (f_{THz}) of the wireless signal by a difference frequency Δf. The difference frequency Δf is treated as an intermediate frequency in subsequent stages and is preferably within the frequency range that can be handled by electronic circuits, but if the difference frequency is close to the low frequency range of the information signal, the information signal might be affected by issues such as distortion. For example, the difference frequency is preferably approximately from 10 GHz to 100 GHz.

Here, assuming that the carrier contained in the wireless signal S4 is generated from another optical frequency comb and the repetition frequency (i.e., the carrier frequency) is f_{THz}, the repetition frequency (fᵣₑₚ) of the optical frequency comb on the reception side is simply required to be f_{THz} - Δf or f f_{THz} + Δf. In other words, the micro-optical resonator 204 excited by the excitation laser 203 is simply required to generate an optical frequency comb with a repetition frequency of f_{THz} - Δf or f_{THz} + Δf.

Denoted at 2051 and 2052 are optical bandpass filters for separately extracting arbitrary adjacent optical frequency modes m3 and m4 (with respective frequencies v₃ and v₄), respectively, from the optical frequency comb. In the present embodiment, the optical frequency modes m3 and m4 are supplied to the optical circulators 2061 and 2062, respectively.

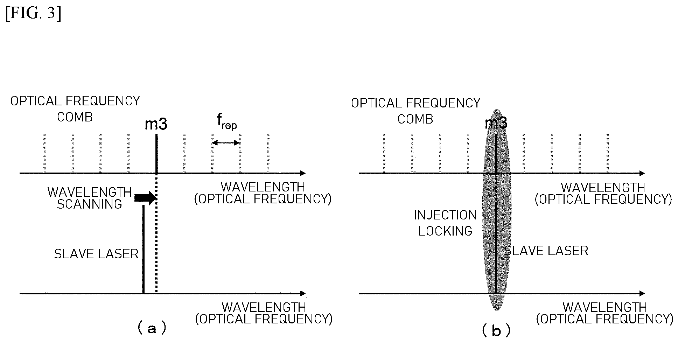

The optical circulator 2061 directs the optical frequency mode m3 into a slave laser 2071, so that injection locking occurs. The mechanism and operational principles of injection locking will be described in further detail with reference to FIG. 3. The optical frequency mode m3 is directed into the slave laser 2071 via the optical circulator 2061. With the optical frequency mode m3 in the slave laser 2071, the wavelength of the slave laser 2071 is scanned to the vicinity of the wavelength of the optical frequency mode m3, as shown in FIG. 3(a). As a result, the wavelength of the slave laser 2071 is pulled towards the wavelength of the optical frequency mode m3, and injection locking occurs, as shown in FIG. 3(b). This enables the low phase noise characteristics of the optical frequency mode m3 to be transferred to the slave laser 2071. Here, if the slave laser 2071 has sufficiently high power and a sufficiently high SN ratio compared to the optical frequency mode m3, the transfer is equivalent to optically amplifying the optical frequency mode m3 with low phase noise, high power, and a high SN ratio. The optical frequency mode m3 optically amplified as such is supplied to the electro-optic conversion element 202 through the optical circulator 2061.

The optical circulator 2062 directs the optical frequency mode m4 into the slave laser 2072, so that injection locking occurs in the slave laser 2072, resulting in the optical frequency mode m4 being optically amplified in the same manner as the optical frequency mode m4.

The electro-optic conversion element 202 has the function of propagating probe light through an optical waveguide provided in an electro-optic (EO) material or a substrate, thereby performing phase modulation on the probe light in accordance with an external electric field. The electro-optic conversion element 202 can, for example, be a so-called LN modulator using a lithium niobate (LiNbO₃) crystal as the electro-optic material. In the present embodiment, the "external electric field" specifically refers to the wireless signal (S4) received by the reception antenna. Other examples of the electro-optic crystal material, in addition to lithium niobate, include zinc telluride (ZnTe), gallium phosphide (GaP), gallium arsenide (GaAs), DAST, and EO polymers.

An example of the electro-optic polymers (i.e., the EO polymers) herein is the one disclosed in Japanese Patent Application No. 2019-537669.

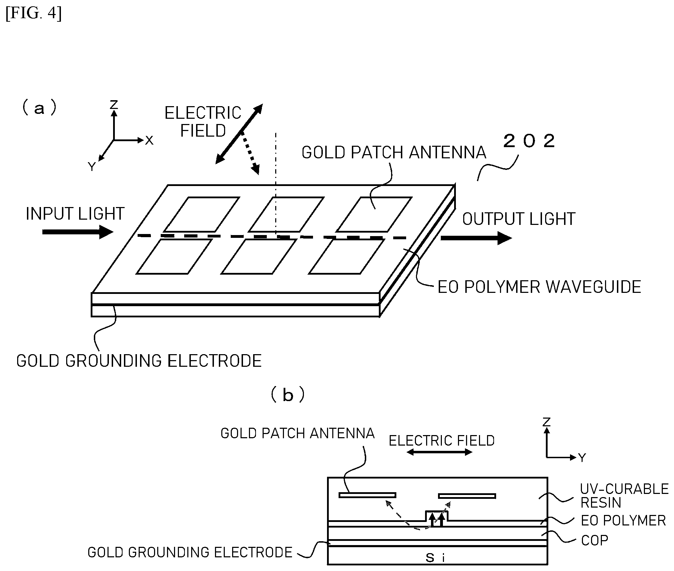

The structure and operation of the electro-optic conversion element 202 using an EO polymer will be described in more detail with reference to FIGS. 4 to 6. Initially, the wireless signal S4 transmitted by the wireless reception device 1 is applied through the reception antenna 201 to the electro-optic conversion element 202 as the external electric field. The wireless signal S4 can be a carrier signal with a frequency of f_{THz} (for example, 300 GHz) modulated by an information signal. The electro-optic conversion element 202 can be structured as shown in FIGS. 4(a) and 4(b), but is not particularly limited to this. These figures illustrate (a) a perspective view and (b) a cross-sectional view of the structure.

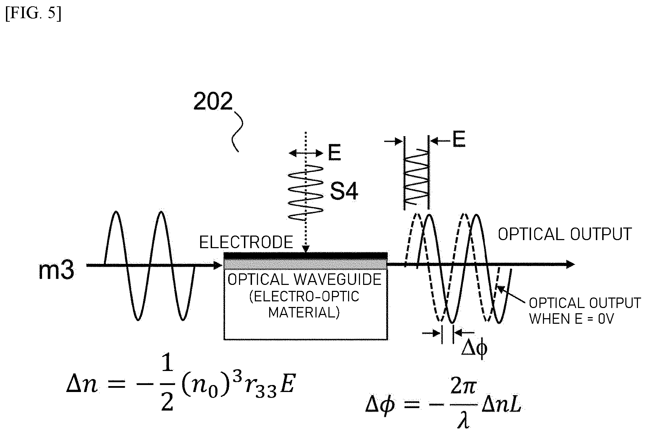

In both figures, the electro-optic conversion element 202 has an EO polymer optical waveguide provided on COP (cycloolefin polymer). Moreover, on both sides of the waveguide, gold patch antennas are embedded in UV-curable resin. When the electric field component of the wireless signal oscillates laterally across the optical waveguide, an alternating electric field is generated between the gold patch antennas on opposite sides of the optical waveguide. This electric field induces the Pockels effect on the EO polymer, causing a change in refractive index (Δn). As a result, phase modulation is induced in the optical frequency modes propagating through the EO material. This process is illustrated in FIG. 5.

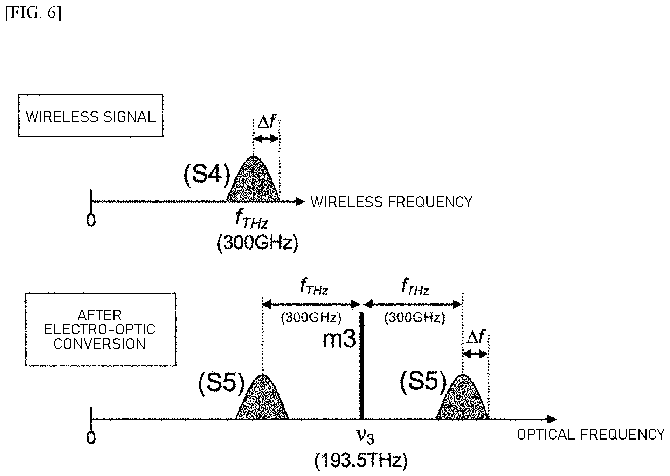

In the optical spectrum of the optical output from the electro-optic conversion element 202, as shown in FIG. 6, in addition to the optical frequency mode m3 (with a frequency of v₃), modulated signal components with a bandwidth of Δf (modulated sideband light S5) appear at positions distanced from v₃ by f_{THz} due to electro-optic phase modulation induced by the wireless signal S4 (with a carrier frequency of f_{THz} and a modulation frequency band of Δf).

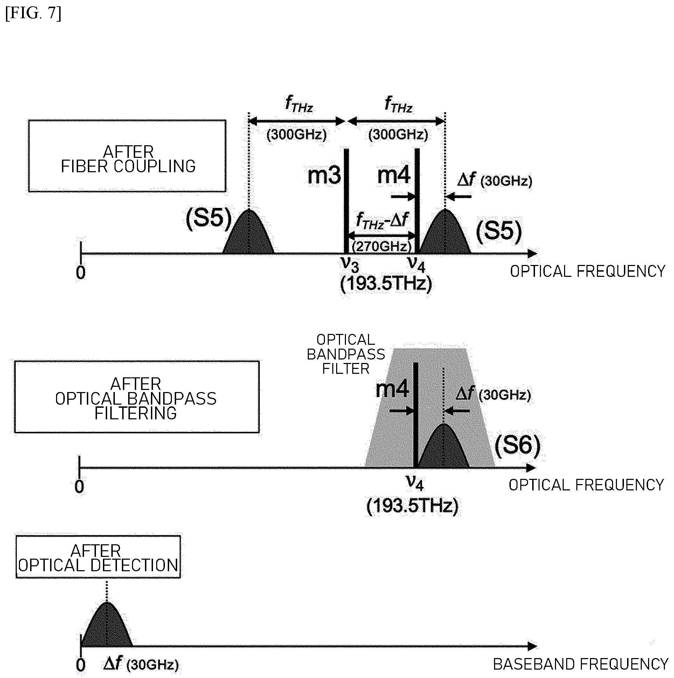

A fiber coupler 208 multiplexes the output light (m3, S5) from the electro-optic conversion element 202 with the optical frequency mode light (m4) outputted by the optical circulator 2062. FIG. 7 illustrates spectral characteristics of this multiplexing. In the example of FIG. 7, the modulated signal components of the optical frequency mode m3 are outputted by the electro-optic conversion element 202 at frequencies of v₃ ± f_{THz} relative to the optical frequency v₃ of the optical frequency mode m3. An optical bandpass filter 209 extracts the optical frequency mode light (m4) not subjected to electro-optic phase modulation, and the most adjacent output light S5 to the wavelength thereof. In the present embodiment, the wireless signal S4 has a carrier with a frequency of f_{THz} modulated with an information signal of the modulation bandwidth Δf, and since the optical frequency difference (fᵣₑₚ) between the optical frequency mode pair (m3 and m4) is f_{THz} - Δf, the frequency interval between the high-frequency-side modulated signal component S5 of the optical frequency mode m3 and the optical frequency mode m4, as extracted by the optical bandpass filter 209, is (v₃ + f_{THz}) - (v₃ + f_{THz} - Δf) = Δf.

In the present embodiment (FIG. 7), f_{THz} is 300 GHz, and the optical frequency difference between m3 and m4 (fᵣₑₚ) is 270 GHz. The frequency Δf corresponds to a so-called intermediate frequency and is set at 30 GHz. Therefore, by optically mixing m4 and S5, with a frequency difference of Δf = 30 GHz, and converting the resultant beat signal into an electrical signal, a transmission information signal modulated with a 30-GHz carrier (baseband) signal is obtained. For a frequency of approximately 30 GHz, demodulation can be performed using a standard electronic circuit. In the present embodiment, the output light of the optical bandpass filter 209 is sent through an optical fiber to the demodulation device 3 (S6), where the output light is electrically demodulated, resulting in a baseband information signal.

It should be noted that the EO material used in the present embodiment is an EO polymer. EO polymers have a high EO coefficient compared to conventional electro-optic crystals (i.e., inorganic materials, such as ZnTe and LN) while also maintaining relatively low loss in the THz region, enabling ultra-fast response at several hundred GHz or higher. Moreover, the group velocity mismatch between the THz wave and the optical signal can also be adjusted.

### EXAMPLES

Hereinafter, examples of the present invention will be described.

### (First Example)

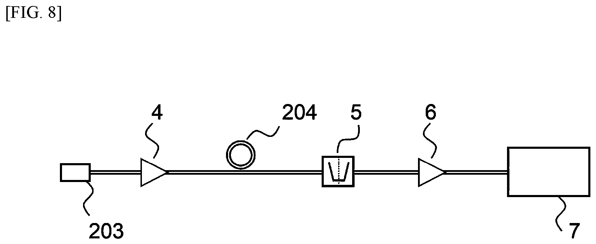

This example describes an actual experiment involving generating an optical frequency comb with a micro-optical resonator and evaluating changes in SN ratio during conventional fiber optic amplification. FIG. 8 illustrates the method of the experiment in the present example. The excitation laser 203 used in the present example was an external-cavity semiconductor laser with a wavelength of 1560 nm, excitation laser light from which was optically amplified by a pre-stage fiber optic amplifier 4 and supplied to the micro-optical resonator 204. The micro-optical resonator 204 outputted an optical frequency comb, from which the excitation laser light was removed by an optical band-stop filter 5, and then the optical frequency comb was optically amplified using a post-stage fiber optic amplifier 6 and spectrally measured by an optical spectrum analyzer 7.

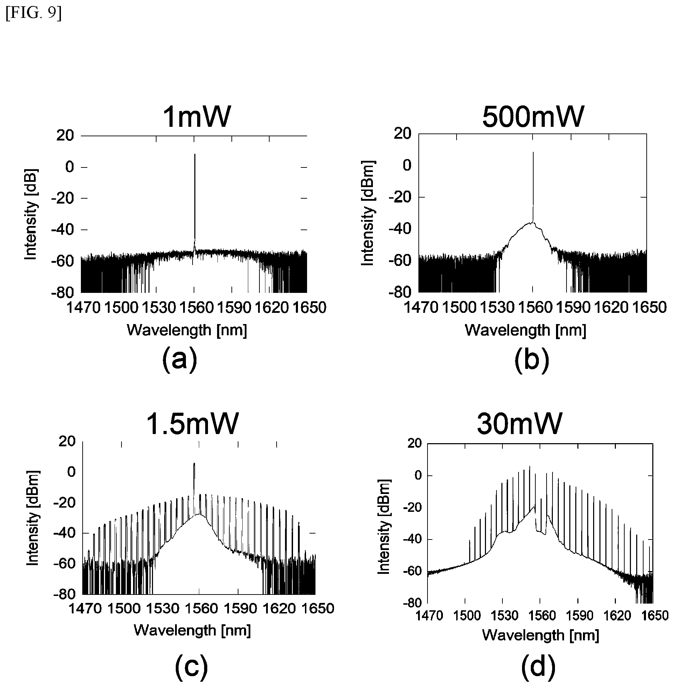

FIG. 9 shows changes in optical power corresponding to the optical spectra measured by the optical spectrum analyzer 7. The output of the excitation laser 203 had a single-mode optical spectrum with an SN ratio of 60 dB at an optical power of 1 mW, as shown in FIG. 9(a). Taking account of optical loss in the micro-optical resonator 204, the output of the excitation laser 203 was optically amplified by the pre-stage fiber optic amplifier 4, resulting in an optical power of 500 mW, as shown in FIG. 9(b), but the optical spectrum of amplified spontaneous emission (ASE) was superimposed onto the tail of the single-mode optical spectrum, with the result that the SN ratio decreased to 45 dB. By supplying the output of the pre-stage fiber optic amplifier 4 to the micro-optical resonator 204, the optical power of the output of the micro-optical resonator 204 decreased to 1.5 mW, as shown in FIG. 9(c), with the result that the ASE spectrum was observed to be superimposed onto the spectrum of the optical frequency comb. Here, the optical frequency comb mode with a wavelength of 1560 nm had the excitation laser light superimposed thereon, and looking at other mode components, the SN ratio was 30 dB or lower. Ultimately, the optical frequency comb was optically amplified by the post-stage fiber optic amplifier 6, resulting in an output optical power of 30 mW, as shown in FIG. 9(d), but the SN ratio was 20 dB or lower due to the superimposition of the ASE spectrum.

### (Second Example)

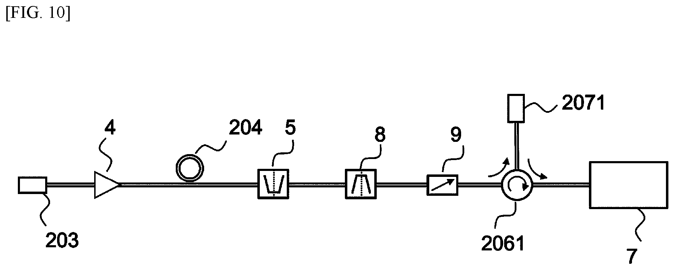

This example describes an experiment involving generating an optical frequency comb with a micro-optical resonator and performing injection locking on the output of the slave laser. FIG. 10 illustrates the method of the experiment in the present example. The excitation laser 203 used in the present example was an external-cavity semiconductor laser with a wavelength of 1540 nm, excitation laser light from which was optically amplified by the pre-stage fiber optic amplifier 4 and supplied to the micro-optical resonator 204. The micro-optical resonator 204 outputted an optical frequency comb, from which the excitation laser light was removed by the optical band-stop filter 5.

Furthermore, a single mode with a wavelength of 1550 nm was extracted using the optical bandpass filter 8, adjusted in optical power by an optical attenuator 9, and then directed into the slave laser 2071 via the optical circulator 2061. Here, the power of the extracted optical frequency comb mode and the wavelength of the slave laser 2071 were optimized, so that the slave laser 2071 was locked to the optical frequency comb mode, and injection locking occurred.

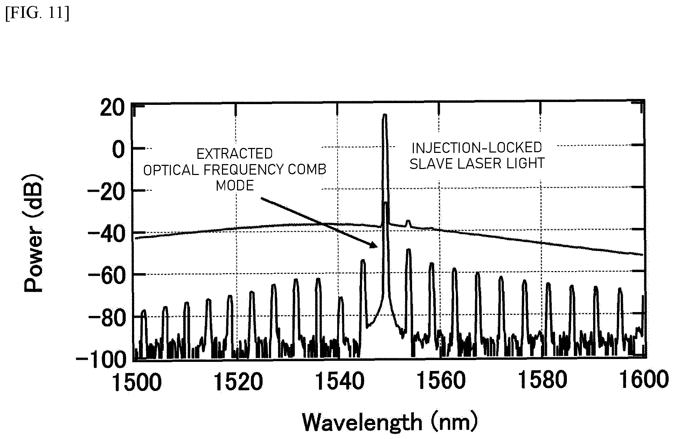

FIG. 11 shows a comparison of the optical spectrum between the optical frequency comb mode extracted by the optical bandpass filter 8 and the output of the injection-locked slave laser 2071. It can be confirmed that the single-mode optical spectrum of the slave laser 2071 matched the extracted optical frequency comb mode exactly in wavelength, and the low phase noise characteristics of the optical frequency comb were transferred to the slave laser 2071. On the other hand, the injection-locked slave laser 2071 had an optical output power of 30 mW and an SN ratio of 60 dB, resulting in significant improvements over the low output power and low SN ratio of the optical frequency comb.

### INDUSTRIAL APPLICABILITY

The present invention is applicable to switching stations and relay stations that optically transmit wireless signals received from mobile terminals and wireless base stations.

### DESCRIPTION OF THE REFERENCE CHARACTERS

1 wireless base station
2 wireless reception device
3 demodulation device
201 reception antenna
202 electro-optic conversion element
203 excitation laser
204 micro-optical resonator
2051, 2052 optical bandpass filter
2061, 2062 optical circulator
2071, 2072 slave laser
208 fiber coupler
209 optical bandpass filter
4 pre-stage fiber optic amplifier
5 optical band-stop filter
6 post-stage fiber optic amplifier
7 optical spectrum analyzer
8 optical bandpass filter
9 optical attenuator

## Claims

1. A wireless reception device for receiving a wireless signal modulated with an information signal, comprising:
a reception antenna;
an excitation laser that outputs laser light with a predetermined wavelength;
a micro-optical resonator that is excited by the laser light and generates an optical frequency comb with a repetition frequency different from a carrier frequency of the wireless signal by a difference frequency;
an optical bandpass filter that independently separates an arbitrary optical frequency mode and an adjacent optical frequency mode from the optical frequency comb consisting of optical frequency modes, the adjacent optical frequency mode being spaced apart from the arbitrary optical frequency mode by a repetition frequency;
an optical circulator that optically amplifies the separated arbitrary and adjacent optical frequency modes by injection locking to a slave laser with a wavelength adjacent to the separated arbitrary and adjacent optical frequency modes;
an electro-optic conversion element that is provided at a reception portion of the reception antenna and optically modulates the arbitrary optical frequency mode in accordance with the wireless signal; and
an optical bandpass filter that separates the adjacent frequency mode and a modulated component of the arbitrary optical frequency mode adjacent thereto.

2. The wireless reception device according to claim 1, wherein the difference frequency is between 10 GHz and 100 GHz.

3. The wireless reception device according to claim 1 or 2, further comprising a demodulation device that mixes the modulated component of the arbitrary optical frequency mode and the adjacent optical frequency mode spaced apart from the arbitrary optical frequency mode by the difference frequency and converts the resultant optical beat signal into an electric signal.

4. The wireless reception device according to claim 3, wherein the electro-optic conversion element is composed of one or more electro-optic crystal materials selected from the group consisting of lithium niobate (LiNbO₃), zinc telluride (ZnTe), gallium phosphide (GaP), gallium arsenide (GaAs), and DAST.

5. The wireless reception device according to claim 3, wherein the electro-optic conversion element is composed of an electro-optic polymer.

6. The wireless reception device according to claim 3, wherein the micro-optical resonator is composed of one or more media having a non-linear optical effect and selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

7. The wireless reception device according to claim 3, wherein the reception antenna is a parabolic antenna, a Cassegrain antenna, or a horn antenna and has the electro-optic conversion element provided near a focal point of the antenna.

8. The wireless reception device according to claim 3, wherein the slave laser is a distributed feedback (DFB) laser without an optical isolator at an emission portion.
